# EUROPEAN PATENT APPLICATION

(11) **EP 3 270 345 A1**
(43) Date of publication of application: **17.01.2018**
(21) Application number: 17162003.2
(22) Date of filing: 21.03.2017
(51) Int. Cl.: G06Q 30/00

(54) **A SYSTEM FOR FACILITATING VERIFICATION AND EXCHANGE OF HALAL PRODUCT RELATED INFORMATION IN A GEOGRAPHICALLY DISPERSED NETWORK OF TRADING PARTNERS**

(30) Priority: 08.04.2016 MY PI2016701310
(71) Applicant: Shaari, Amnah Binti, Wilayah Persekutuan Kuala Lumpur (MY)
(72) Inventor: Shaari, Amnah Binti, Wilayah Persekutuan Kuala Lumpur (MY)
(74) Representative: Hutter, Anton

(57) **Abstract**

A system (100) and method for facilitating verification and exchange of halal products related information between geographically dispersed trading partners has been disclosed. The system (100) interfaces with external authorization bodies to integrate trade related information of a product with its associated halal certificate information for verification of the halal products. The integrated information is available to trading partners for addressing supply chain issues of halal products. Thereby, the system (100) plays a crucial role of ensuring that heterogeneous certificate information is captured, verified and converted into a format suitable for use with trade related information, for automatic synchronization of product specification and halal certification information between trading partners.

## Description

### FIELD OF THE INVENTION

The present invention relates to creation of an integrated platform for geographically dispersed network of trading partners to facilitate verification or exchange of information related to halal products.

### BACKGROUND OF THE INVENTION

The global gap between supply and demand of halal products is rapidly increasing and is estimated at about a deficit of 80 percent. One of the factors leading to the supply and demand gap is the difference in halal food dietary practices and guidelines observed by Islamic communities of different regions. The difference in halal food dietary practices and guidelines creates challenges for supply-chain industries as they need to customize their products and its packaging information in order to meet and maintain halal practices and guidelines of a particular region.

The supply-chain also faces challenges because consumers need retailers to provide them with detailed information about the products including their source, their manufacturing process, and ingredients so that the consumers are assured that the products meet their religious beliefs.

Another challenge in fulfilling the halal products and / or services supply and demand gap is that local suppliers of halal products use proprietary technology for promoting their products and hence are not visible on global trading platforms. Moreover, the local suppliers are unaware of the information relevant for the global retailers in order for supplying halal products globally and hence their products are not visible to global retailers.

Even if some suppliers register their products with the global trading platforms, these platforms do not capture relevant halal related information with the product details. Hence, it is very difficult for the buyers or retailers to check the halal certificate of the products and verify whether they meet the halal standards prevalent to a particular region.

Hence, there is felt to a need for a system which would bridge the demand and supply gap for halal products and services, by:
- capturing traceability of a certified product so that it meets specific halal practices;
- linking the product information with halal certification information so that global trading partners can access a range of halal linked parameters relevant to the needs of different markets and cultures; and
- facilitating communication between the trading partners to foster trade and exchange of halal related product information.

### SUMMARY OF THE INVENTION

Embodiments of the present invention provide a system and method for facilitating verification and exchange of halal product related information between geographically dispersed network of trading partners.

In accordance with a first aspect of this invention, the system comprises an interfacing module for connecting with a plurality of trading partners, external authorization bodies including global trade synchronization bodies, and global halal certification bodies; an extraction module for extracting each of the trading partner's product and halal certification information from the external authorization bodies via the interfacing module. The system further comprises an integration module for receiving product and halal award or certificate related information from the trading partner via the interfacing module and the extracted information verifies the trading partner and its corresponding product by comparing the product and halal award or certificate related information with the extracted information, merges the product and halal award or certificate related information for the product into a data structure, if the verification is successful, and stores the data structure into a repository; and a data exchange platform co-operates with the repository and includes a communication interface to provide interaction between the trading partners to communicate product related information.

Typically, the trading partners provide product and halal award or certificate related information of products including identification number of the product provided by the global trade synchronization body, halal certificate or award details ingredients used in the products, nutrition value of the product, source of raw materials used in the product, product packaging, and use of halal logistics, halal warehousing halal retailing and halal finance via the interfacing module.

Further, the interfacing module communicates with the external authorization bodies for extraction of product related and certification related information using communication technique including application programmable interfaces, API, XML messages and electronic data interchange, EDI.

Still further, the data exchange platform includes a portal that comprises a payment interface to facilitate purchase of halal products.

In addition, the portal includes a plurality of action buttons to facilitate trading partners to search for a particular product or a counterpart / trading partner, subscribe to a particular product catalogue, contact a trading partner to request for information and make payment for a particular product.

Furthermore, the system comprises an analytical engine to analyse activities of the system and generates analytics including forecasts, ranks and / or ratings of trading partners / products, recommendation of similar products reports and combinations thereof.

Additionally, the system comprises an updation module to update product related information and certification related information to the repository based upon interpreting changes to the product catalogues of trading partners and changes to halal certification information registered with the halal certification bodies.

In accordance with a second aspect of this invention, the method for facilitating capture, verification, and interaction of halal product related information between geographically dispersed network of trading partners, comprises the following steps: providing and interface for connecting with a plurality of trading partner, and external authorization bodies including global trade synchronization bodies, and global halal certification bodies; receiving product and halal award or certificate related information from the trading partner; extracting each of the trading partner's product and halal certification information from the external authorization bodies; verifying the trading partner and its corresponding product by comparing the product and halal award or certificate related information with the extracted information; merging the product and halal award or certificate related information from the corresponding trading partner with the extracted halal certification information for the product into a data structure, if the verification is successful; storing the data structure in a repository; and providing a communication interface to provide interaction between the trading partners to communicate product related information stored in the repository.

In accordance with the second aspect, the step of merging the product and halal award or certificate related information with the halal certification information for the product into a data structure includes capturing identification number of the product provided by the global trade synchronization body, ingredients used in the products, nutrition value of the product, source of raw materials used in the product, product packaging, and use of halal logistics, halal warehousing, halal retailing and halal finance.

Further, the step of providing a communication interface includes the step of facilitating trading partners to search for a particular product or a counterpart / trading partner, subscribe to a particular product catalogue, and contact a trading partner for requesting for information and make payment for a particular product.

Still further, the method comprises the steps of providing a payment interface to facilitate purchase of halal products.

Furthermore, the method comprises the steps of tracking and interpreting changes to the product catalogues of trading partners registered with the global trade synchronization bodies and halal certification information available with the halal certification bodies; and updating the changes to data structure of that product stored in the repository.

Additionally, the method comprises the steps of analyzing activities on the portal; and generating analytics including forecasts, ranks and / or ratings for trading partner's products, recommendation of similar products and reports and combinations thereof based on the analyzed activities.

In accordance with a third aspect of the present invention, there is provided a method of generating a data structure to facilitate capture of verified halal product related information for geographically dispersed network of trading partners, the method comprising the following steps: receiving product and halal award or certificate related information from trading partners; extracting each of the trading partner's product and halal certification information from external authorization bodies including global trade synchronization bodies and global halal certification bodies based on the product and halal award or certificate related information; verifying the trading partner and its corresponding product by comparing the product and halal award or certificate related information provided by the trading partner with the extracted information; merging the product and halal award or certificate related information received from the corresponding trading partner with the extracted halal certification information for the associated product, if the verification is successful; storing the merged information for a particular trading partner and at least one corresponding product into a discrete data structure; and storing the data structure into a repository.

In accordance with the third aspect, the step of receiving the product and halal award or certificate related information from trading partners includes capturing identification number of the product provided by the global trade synchronization body, halal certificate or award details, ingredients used in the products, nutrition value of the product, source of raw materials used in the product, product packaging, and information including use of halal logistics, halal warehousing, halal retailing and halal finance.

In accordance with a fourth aspect of the present invention, there is proposed a computer readable medium for capturing verified halal product related information for geographically dispersed network of trading partners, comprising: a processor configured to receive product and halal award or certificate related information from at least one trading partner, extract the at least one trading partner's product and halal certification information from external authorization bodies including global trade synchronization bodies and global halal certification bodies based on the product and halal award or certificate related information; verify the at least one trading partner and its corresponding product by comparing the product and halal award or certificate related information with the extracted information; and merge the product and halal award or certificate related information received from the corresponding trading partner with the extracted halal certification information for the associated product, if the verification is successful; and a repository for storing the merged information for a particular trading partner and at least one corresponding product into a discrete data structure.

Typically, the product and halal award or certificate related information from trading partners includes identification number of the product provided by the global trade synchronization body, halal certificate or award details, ingredients used in the products, nutrition value of the product, source of raw materials used in the product, product packaging, and information including use of halal logistics, halal warehousing, halal retailing and halal finance.

In accordance with the fourth aspect of the present invention, the computer readable medium is incorporated in a data exchange platform for synchronizing and communicating halal product related information stored in the data structure between geographically dispersed networks of trading partners. Alternatively, the computer readable medium is incorporated in a portal having a communication interface and a payment interface for using halal product related information stored in the data structure for facilitating commerce of halal products between geographically dispersed network of trading partners.

Various objects, features, aspects and advantages of the inventive subject matter will become more apparent from the following detailed description of preferred embodiments, along with the accompanying drawing figures in which like numerals represent like components.

### BRIEF DESCRIPTION OF THE DRAWINGS

The accompanying drawings are included to provide a further understanding of the present invention, and are incorporated in and constitute a part of this specification. The drawings illustrate exemplary embodiments of the present invention and, together with the description, serve to explain the principles of the present invention.
**FIGURE 1** is a schematic of the system for facilitating verification and exchange of halal product related information for geographically dispersed network of trading partners, in accordance with the present invention;
**FIGURE 2** is an exemplary layout of the data structure created by the integration module in accordance with the present invention;
**FIGURES 3** to **5** are exemplary layouts of the user interface of the portal in accordance with the present invention; and
**FIGURE 6** is a flowchart showing the steps for facilitating interaction and commerce of halal products between geographically dispersed network of trading partners, in accordance with the present invention.

### DETAILED DESCRIPTION

The embodiment herein and the various features and advantageous details thereof are explained with reference to the non-limiting embodiment in the following description. Descriptions of well=known components and processing techniques are omitted so as to not unnecessarily obscure the embodiments herein. The examples used herein are intended merely to facilitate an understanding of ways in which the embodiment herein may be practiced and to further enable those of skill in the art to practice the embodiment herein. Accordingly, the description should not be construed as limiting the scope of the embodiment herein.

The description hereinafter, of the specific embodiment will so fully reveal the general nature of the embodiments herein that others can, by applying current knowledge, readily modify or adapt or perform both for various applications such specific embodiment without departing from the generic concept, and, therefore, such adaptations and modifications should and are intended to be comprehended within the meaning and range of equivalents of the disclosed embodiments. it is to be understood that the phraseology or terminology employed herein is for the purpose of description and not of limitation.

Various terms as used herein are defined below. To the extent a term used in a claim is not defined below, it should be given the broadest definition persons in the pertinent art have given that term as reflected in printed publications and issued patents at the time of filing. The term 'trading partners' used in this specification includes manufacturers, suppliers, buyers, retailers, wholesalers, and distributors who collaborate for conducting trade.

The term 'trading partners' also includes collaboration between manufacturers, suppliers, buyers, retailers, wholesalers, distributors with data pools wherein data pools are centralized repositories which store business transaction information for a particular region or location.

The increasing demand and supply gap for halal products and dearth of global trading platforms that concurrently provide product specification information from a halal compliance perspective and halal certification information on a common global platform led to the present invention. Aspects of the present invention facilitate in overcoming the aforementioned drawbacks by facilitating interaction between trading partners and providing a global platform for verification, interaction and commerce of halal products between geographically dispersed networks of trading partners.

According to the present invention, the proposed system facilitates in capturing and synchronizing trade related information such as pricing; halal certification related information such as halal certificate issuing body, halal certificate expiry date, halal standard reference information such as halal logistics, halal finance, halal retailing, halal warehousing, source of the products; and lifestyle related information of products such as ingredients in a single data structure. Thus, providing global trading partners access to holistic information on the halal product through a single platform so that they could access a range of halal linked parameters and assess whether the halal product's specification meets needs of their market and prevailing halal beliefs.

In addition, the proposed system interfaces with the appropriate authorization bodies including global trade synchronization bodies and global halal certification bodies to ensure that the information captured by the system in the data structure is verified by using information available on these bodies and hence trusted.

The proposed system also provides a communication interface for connecting trading partners and payment gateways for the purposes of exchanging information and commerce of the products, respectively. The communication interface enables retailers or buyers to contact a supplier and either subscribe to their product catalogue(s) and any updates to the catalogue(s) thereafter or contact them to get additional information on their product(s).

Moreover, the proposed system during registration of trading partners and their products captures additional product related information from the trading partners to ensure that the product is traceable and is halal compliant. The information includes source of raw materials used for the products, ingredients used in the product and their content percentage, category of shipping company (whether it is halal compliant) used for shipping of the product, whether the supplier has availed Islamic insurance for his company or manufacture of the halal products and whether the supplier is ready for exporting products. The system ensures that all necessary information to perform business transactions between trading partners is captured, stored and recalled in a standardized format.

Thereby, the present invention provides an integrated platform that utilizes the synchronized information for addressing supply chain issues of halal products and addresses any business to consumer (BZC) or consumer to consumer (CZC) needs while maintaining verified halal information which can also be traced.

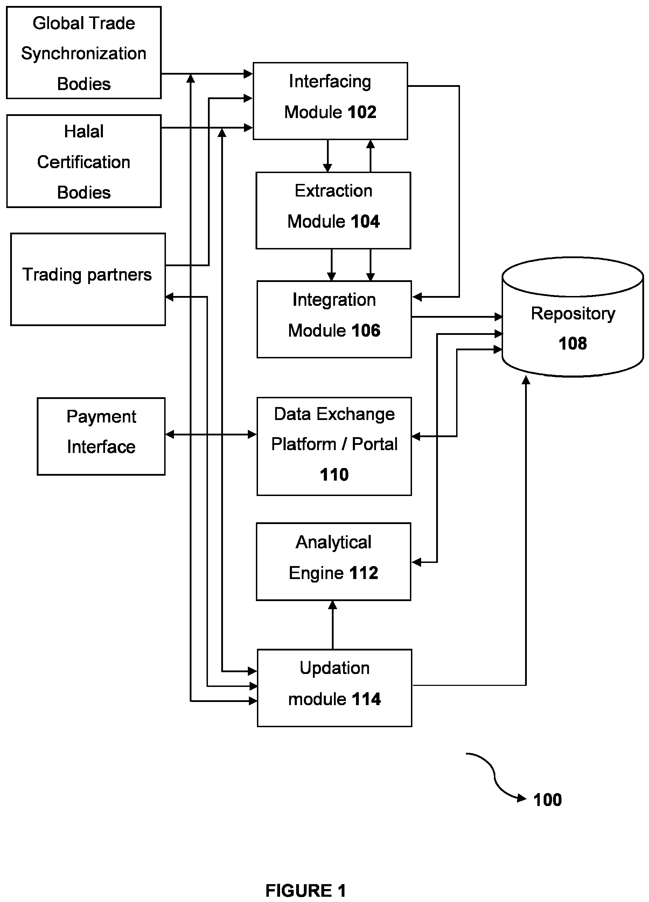

Referring to the accompanying drawings, **FIGURE 1** discloses a system (100) for facilitating verification, interaction and commerce of halal products for geographically dispersed network of trading partners. Aspects of the present invention may be practiced on a computing platform that includes in general, at least one processor and at least one storage device or at computer readable medium co-operating with the processor for storing instructions and for data processing. The present invention, may be hosted on at least one physical server or on a virtual environment such as the cloud, and uses hardware resources, software resources or combinations thereof to execute modules of the system (100).

In accordance with this invention, the system (100) includes an interfacing module (102) for connecting with a plurality of trading partners, external authorization bodies including global trade synchronization bodies, for instance Global Data Synchronization Network (GDSN), and global halal certification bodies, for instance Department of Islamic Development Malaysia (JAKIM) or Australian Halal Food Service (AHFS) for verifying genuineness of a trading partner and its products. The interfacing module (102) connects and communicates with the external authorization bodies and trading partners using communication techniques including public Application Programmable Interfaces (APIS), XML messages and Electronic Data Interchange (EDI) for exchange or extraction of information.

The system (100) further includes an extraction module (104) for extracting each of the trading partners product(s) information, and halal certification information from the external authorization bodies via the interfacing module (102). The extracted information is typically in the XML format.

In an exemplary implementation, the present invention requires the trading partner, typically a supplier, to be registered with GDSN and provide the Global Trade item Number (GTIN) number / Stock Keeping Unit (SKU) number of their registered products and halal certification number or award details for enrolling with the system (100). According to this embodiment, during enrolment the trading partner also deposits the 'product information master data' or 'product and halal award or certificate related information' to the system (100) via the interfacing module (102). The terms 'product information master data' and "product and halal award or certificate related information' are used interchangeably hereinafter.

In accordance with this invention, the product information master data includes but is not limited to product attributes, halal certificate / award information master data trade related information and halal certification information is seen in **TABLE 1:**

**TABLE 1: Exemplary halal and lifestyle related information of the products captures by the system.**

| **Halal and Lifestyle related product information** | **Information captured** |
|---|---|
| | Halal Certificate Number |
| HALAL CERTIFICATE | Halal Certificate Body |
| | Date of Original registration |
| | Data re-registration |
| | Expiry Date |
| STANDARD REFERENCE | Ingredient Name |
| | Language |
| | Content Percentage |
| | Source of Animal in Ingredient |
| HALAL FOOD | Product |
| | Category |
| | Nutritional Claim |
| | Diet type |
| COMPANY CLASSIFICATION | Classification of supplier company |
| BUSINESS PROFILE | Export read |
| | Use of Islamic financial product & service |
| | Use of Islamic Insurance |
| | Awards |
| | Awards presenter |

The extraction module (104) then extracts the product catalogue(s), which includes the trade related product information from the GDSN based on the GTIN /SKU of the product.

According to the first aspect of the present invention, the system (1 OO) extracts product information of the products enrolled / registered by the trading partner from the global trade synchronization bodies. The extraction module (104) also extracts the halal certification information based on the halal certificate details provided by the trading partner including the validity of the halal certificate, its expiry. and its re-issuance date.

The extracted information and the product information master data deposited by the trading partner is then forwarded to an integration module (106). The integration module (106) plays the key role of verifying if the trading partner and its halal products are genuine by comparing the product information master data as seen in TABLE 1 with the information extracted from the authorization bodies. If the verification is successful then the integration module (106) merges the product information master data with the halal certification information.

The merged information is then stored by the integration module (106) in the form of a data structure into a repository (108). The repository (108) thus created forms a source of trusted halal related information for the trading partners.

In accordance with the first aspect, if the verification is not successful, that is, the product information master data does not sync with its corresponding trade related information on the GDSN and / or halal certification information available with the halal certification bodies then the integration module (106) generates an alert for the system (100). In response to the alert the system calls for manual intervention to cross-verify the information with the authorization bodies and /or decline registration of the corresponding trading partner and its product.

Thereby, integration module (106) via the interfacing module (102) communicates with the external authorization bodies to check the validity of the GTIN number and halal certification details and then creates a data structure per product of the trading partner in the repository (108).

In this manner, the present invention creates a data pool of trusted halal related information for geographical dispersed network of trading partners. The data pool thus created bridges the information gap related to halal products which is currently not available with the global trade synchronization bodies.

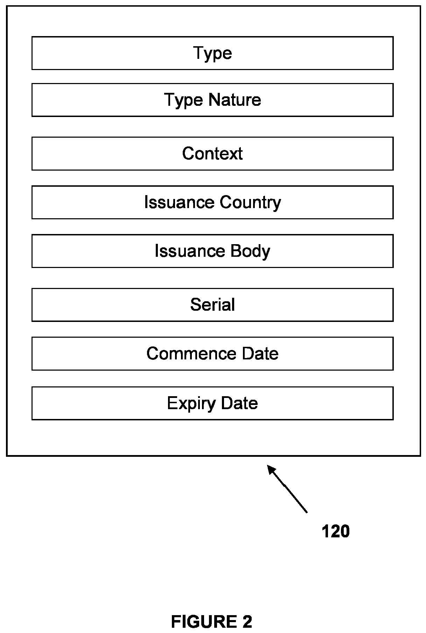

Accordingly, each product is represented by a data structure (120) as seen in **FIGURE 2****,** which holistically captures both product information master data provided by the trading partner and halal related information. The term 'data structure' relates to a location in a memory storage device such as a repository or database, which holds a plurality of sub fields, to store information or attributes of a product.

As seen in **FIGURE 2****,** the proposed data structure (120) layout comprises a plurality of fields including but not limited to 'Type' of the halal accreditation i.e. whether it is a certificate or an award. 'Nature' of the data structure i.e. either general, halal or export 'Context' of the data structure i.e. whether the data structure is for the company itself, or for the product or insurance service or logistic related services. 'Country of issuance' captures the country code of the body issuing the halal certificate or award and 'issuance body' captures name of the halal certification body, for instance JAKIM for Malaysia. The field 'serial number' captures the unique serial number attached with the halal certificate or award. 'Commence date' and 'expiry date' captures the start date and end date of the halal certificate or award respectively in the YYYYMMDD format.

In accordance with this invention, the data structure (120) is customizable and can hold additional fields to capture halal, trade or lifestyle related information of products or services.

Additionally, the integration module (106) also generates a compressed version of the data structure which includes halal accreditation related fields such as Type, Type Nature, Context, Issuance Country and Serial. The compressed version is used to share with the trade synchronization bodies such as GS1 and in a format compatible with the trade synchronization bodies so that the existing trade related information is supplemented with the halal information for enriching the product details available on various geographically dispersed data pools within GDSN.

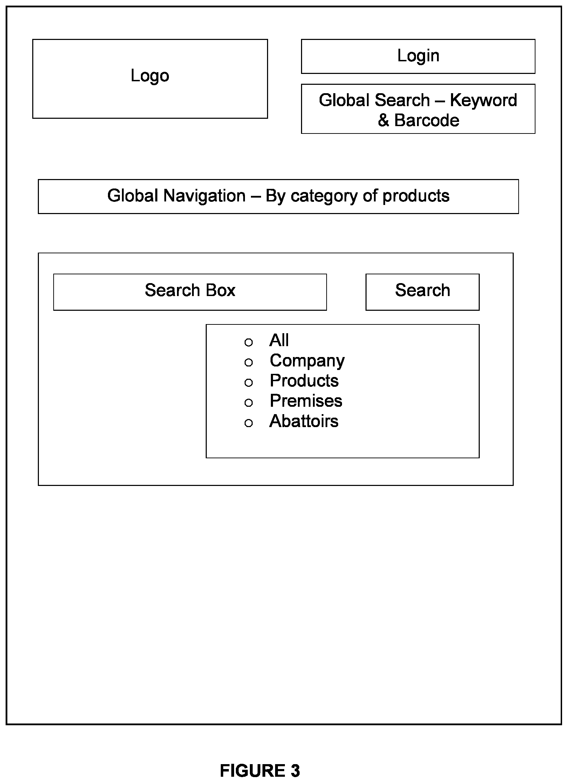

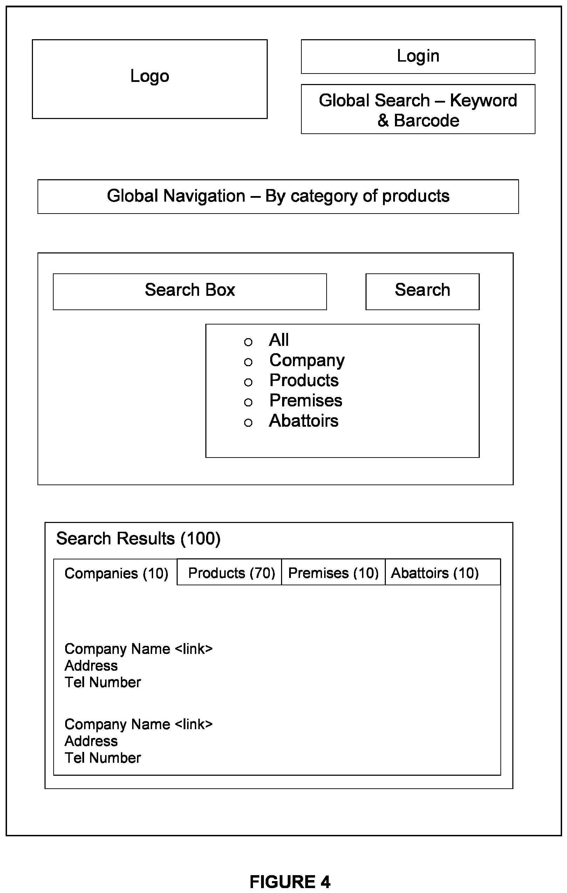

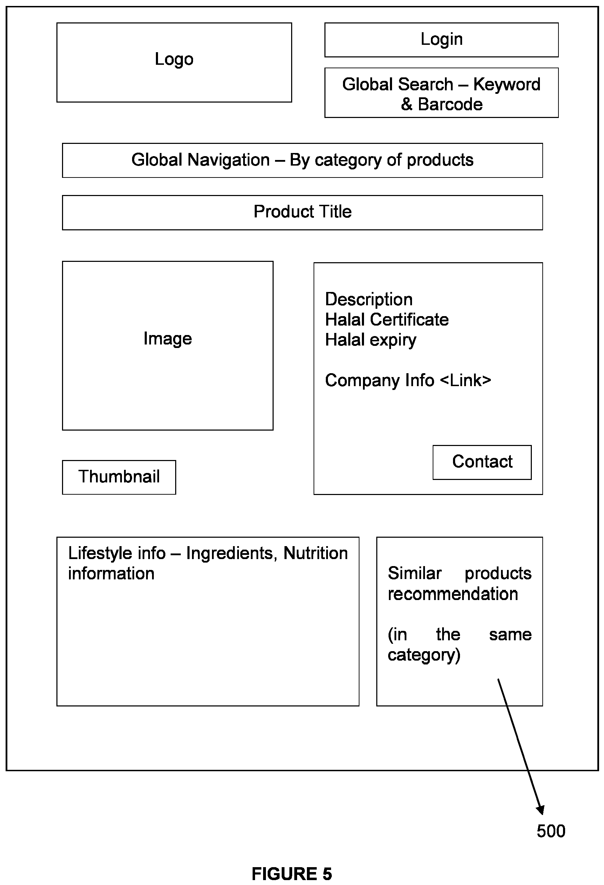

The system provides a data exchange platform (110) which is built upon the repository (108) and includes a communication interface to facilitate interaction between the trading partners for communicating the product related information. The data exchange platform (110) may be provided in the form of an EDI to enable trading partners to share information, for instance, for sharing the merged halal information with a retailer or another data pool. In an alternative embodiment, the data exchange platform (110) may be provided in the form of a portal (110) which provides complete access to the product details stored in the repository (108), wherein the product details are indexed and searchable. The communication interface or user interface of the portal (110) facilitates communication between the trading partners. On registration with the system (100) login credentials are generated for the trading partners to access the portal (110). The portal's (110) user interface includes a plurality of action buttons that enables trading partners to search for a particular product or supplier or premise, subscribe to a particular product catalogue, contact a trading partner to exchange information and create an order and/or payment for a particular product. **FIGURES 3** to **5** show various exemplary implementations of the user interface of the portal (110). The user interface of the portal (100) as seen in **FIGURE 3** provides a search and navigation action button to enable trading to search for a particular product or company and thereafter retrieve a list associated companies as seen in **FIGURE 4** or details and / or list of products as seen in **FIGURE 5****.**

The system (100) also includes an updation module (114) which checks for updates to the supplier's product catalogue on GDSN's database and updates to the halal certificate / award information and accordingly, updates the corresponding data structure in the repository (110). The updation means (114) is able to extract various other information from the GDSN messages too. It has an interpreter for getting the following key information which is crucial to business and accordingly updates the information in the repository (108), the information includes:
- checking for any publication action (i.e. determining when "ADD" or "Change By Refresh" action is performed on the GDSN database).
- checking the hierarchy of a published GTIN (determining whether a published GTIN is a base unit).
- checking if the publication is public or private (ie. whether a GTIN publication is only visible to certain companies).
- checking the publication status and time of publication.

The above information is updated to the repository (108) and also provided to an analytical engine (112) of the system (100) for analysis. The analytical engine (112) uses this information to perform analysis including:
- calculate GTIN count per company
- calculate GTIN count based on item visibility (public/private), publication status
- calculate GTIN impacted by a publication
- Publication made by company at certain time

In accordance with this invention, the result of analysis can help suppliers to maintain and track their published product.

In addition, the analytical engine (112) which is a decision support system of the system (100) runs in the background of data exchange platform or portal (110) to collect data on usage of the data exchange platform or portal and the various actions performed on it and accordingly generates forecasts, ratings, recommendations and reports. For instance, the analytical engine (112) tracks which product from a particular supplier is being ordered frequently and accordingly increases the rating of that product. The analytical engine (112) also assesses a trading platform's profile by verifying the output generated by the integration module (106). if a supplier's product verification request fails or does not meet the GS1 and Halal certification bodies criteria then the trading partners rating is reduced. Such ratings may be used by the analytical engine (112) to filter registered trading partners to ensure that only genuine trading partners are registered with the system (100). Similar check is done on the payment history of a trading partner such as a retailer and accordingly a rating is generated for the retailer by checking if any payment was delayed or had bounced by the retailer. Such ratings provide trading partners with the confidence that the supplier and/or retailer are genuine for selecting as trading partners.

The analytical engine (112) based on trade related information, halal certification information and lifestyle related information of products generates suggestions for similar products as seen in **FIGURE 5** and represented generally by reference numeral (500). Similar recommendations can also be generated by the analytical engine when a search is conducted for a particular supplier or retailer.

Furthermore, the analytical engine (112) also generates reports and forecasts based on the aforementioned analytics. Thereby, generating the required business intelligence for the system (100).

The embodiments of the present invention include various steps, which will be described below. The steps may be performed by hardware components or may be embodied in machine-executable instructions, which may be used to cause a general-purpose or special-purpose processor or logic circuits programmed with the instructions to perform the steps. Alternatively, the steps may be performed by a combination of hardware and software components.

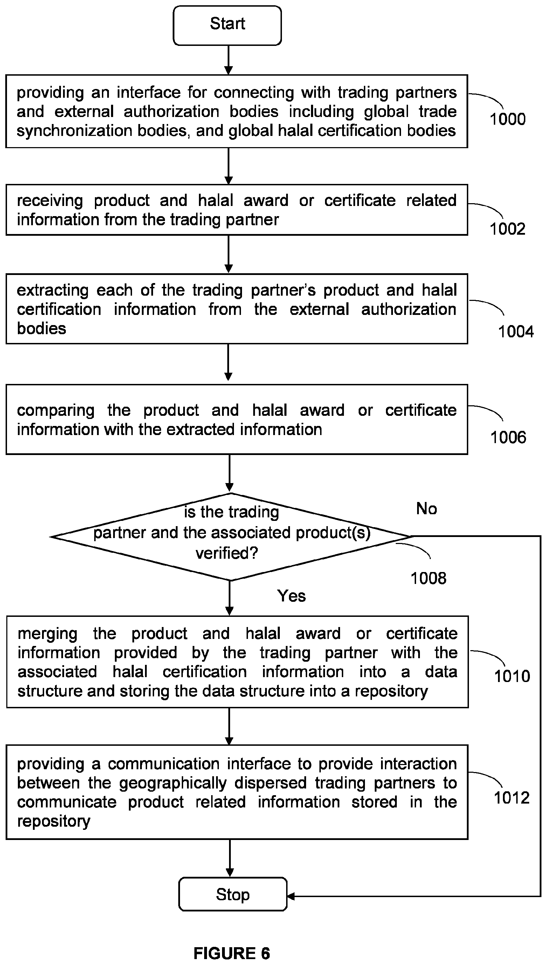

In accordance with a second aspect of this invention, there is provided a method for facilitating capture, verification, and interaction of halal product related information between geographically dispersed network of trading partners, the method comprises the following steps as seen in **FIGURE 6****:** providing an interface for connecting with a plurality of trading partners, and external authorization bodies including global trade synchronization bodies, and global halal certification bodies, (1000); receiving product and halal award or certificate related information from the trading partner, (1002); extracting each of the trading partners product and halal certification information from the external authorization bodies, (1004); comparing the product and halal award or certificate related information with the extracted information (1006); verifying it the trading partner and its corresponding product is genuine, (1008); merging the product and halal award or certificate related information from the corresponding trading partner with the extracted halal certification information for the product into a data structure, if the verification is successful and storing the data structure in a repository, (1010); and providing a communication interface to provide interaction between the trading partners to communicate product related information stored in the repository, (1012).

In accordance with the second aspect, the step of merging the product and halal award or certificate related information with the halal certification information for the product into a data structure includes capturing identification number of the product provided by the global trade synchronization body, ingredients used in the products, nutrition value of the product, source of raw materials used in the product, product packaging and use of halal logistics, halal warehousing, halal retailing and halal finance.

Further, the step of providing a communication interface includes the step of facilitating trading partners to search for a particular product or supplier, subscribe to a particular product catalogue, and contact a trading partner for requesting for information and make payment for a particular product.

Still further, the method comprises the steps of providing a payment interface to facilitate purchase of halal products.

Furthermore, the method comprises the steps of tracking and interpreting changes to the product catalogues of trading partners registered with the global trade synchronization bodies and halal certification information available with the halal certification bodes; and updating the changes to the data structure of that product stored in the repository.

Additionally, the method comprises the steps of analyzing activities on the portal; and generating analytics including forecasts, ranks and / or ratings for trading partner's products, recommendation of similar products and reports and combinations thereof based on the analyzed activities.

In accordance with a third aspect of the present invention, there is provided a method of generating a data structure to facilitate capture of verified halal product related information for geographically dispersed network of trading partners, the method comprises the following steps: receiving product and halal award or certificate related information from trading partners; extracting each of the trading partner's product and halal certification information from external authorization bodies including global trade synchronization bodies and global halal certification bodies based on the product and halal award or certificate related information; verifying the trading partner and its corresponding product by comparing the product and halal award or certificate related information provided by the trading partner with the extracted information; merging the product and halal award or certificate related information received from the corresponding trading partner with the extracted halal certification information for the associated product, if the verification is successful; storing the merged information for a particular trading partner and at least one corresponding product into a discrete data structure; and storing the data structure into a repository.

In accordance with the third aspect, the step of receiving the product and halal award or certificate related information from trading partners includes capturing identification number of the product provided by the global trade synchronization body, halal certificate or award details, ingredients used in the products, nutrition value of the product, source of raw materials used in the product, product packaging, and information including use of halal logistics, halal warehousing, halal retailing and halal finance.

In accordance with a fourth aspect of the present invention, there is proposed a computer readable medium for capturing verified halal product related information for geographically dispersed network of trading partners. The computer readable medium may be in a form of a storage hosted as a part of a data pool or in a physical or virtual environment such as server or the cloud respectively,

In accordance with the fourth aspect the computer readable medium comprises: a computing device such as processor which is configured to receive product and halal award or certificate related information from at least one trading partner, extract the at least one trading partner's product and halal certification information from external authorization bodies including global trade synchronization bodies and global halal certification bodies based on the product and halal award or certificate related information; verify the at least one trading partner and its corresponding product by Comparing the product and halal award or certificate related information with the extracted information; and merge the product and halal award or certificate related information received from the corresponding trading partner with the extracted halal certification information for the associated product, if the verification is successful. The computer readable medium also comprises a repository for storing the merged information for a particular trading partner and at least one corresponding product into a discrete data structure.

Typically, the product and halal award or certificate related information from trading partners includes identification number of the product provided by the global trade synchronization body, halal certificate or award details, ingredients used in the products. nutrition value of the product. source of raw materials used in the product, product packaging. and information including use of halal logistics, halal warehousing, halal retailing and halal finance.

In accordance with the fourth aspect of the present invention, the computer readable medium is incorporated in a data exchange platform for synchronizing and communicating halal product related information stored in the data structure between geographically dispersed trading partners. Alternatively, the computer readable medium is incorporated in a portal having a communication interface and a payment interface for using halal product related information stored in the data structure for facilitating commerce of halal products between geographically dispersed trading partners.

The technical advancement of the present invention include in providing a comprehensive halal product directory which can be used to enrich existing product catalogues of suppliers registered with the global trade synchronizing bodies such as GSI. Alternatively. the halal product directory can be used with a proprietary portal envisaged by the present invention to facilitate exchange of product information between trading partners and also facilitate as an ecommerce platform for order and 30 purchase of halal products globally. Thus, connecting local and global halal product based trading partners worldwide.

Additionally, the proposed invention solves supplier's needs by:
- eliminating increasing cost of maintaining product information across multiple trading platforms;
- Providing transparency to trading partners specially in context of halal certification details as well as ingredients, manufacturing process and use of halal finance, halal warehousing, halal retailing and halal logistics for the products;
- improving the speed to market time of the products;
- managing product reputation by providing rankings and recommendations for products; and providing visibility to the products across the supply chain.

Similarly, the present invention solves the buyers or retailers needs by:
- eliminating the increasing cost of managing supplier and supply chain community across various trading platforms;
- providing the ability to scale-up e-commerce purchases due to access to increased product information and rankings for each product;
- eliminating the potential legal risk from non-compliance of halal standards; and
- eliminating the inability to move to mobile and other digital platforms.

While the foregoing describes various embodiments of the invention, other and further embodiments of the invention may be devised without departing from the basic scope thereof. The scope of the invention is determined by the claims that follow. The invention is not limited to the described embodiments, versions or examples, which are included to enable a person having ordinary skill in the art to make and use the invention when combined with information and knowledge available to the person having ordinary skill in the art.

## Claims

1. A system (100) for facilitating capture, verification, and interaction of halal product related information between geographically dispersed network of trading partners, the system (100) comprising:
an interfacing module (102) for connecting with a plurality of trading partners, external authorization bodies including global trade synchronization bodies, and global haIaI certification bodies;
an extraction module (104) for extracting each of the trading partner's product and halal certification information from the external authorization bodies via the interfacing module (102);
an integration module (106) for receiving product and halal award or certificate related information from the trading partner via the interfacing module (102) and the extracted information for each product via the extraction module (104), wherein the integration module (106) verifies the trading partner and its corresponding product by comparing the product and halal award or certificate related information with the extracted information, merges the product and halal award or certificate related information from the corresponding trading partner with the extracted halal certification information for the product into a data structure in the event that the verification is successful, and stores the data structure into a repository (108); and
a data exchange platform (110) co-operating with the repository (108) and including a communication interface to provide interaction between the trading partners to communicate product related information.

2. The system (100) as claimed in claim 1, wherein the trading partners provide product and halal award or certificate related information of products including identification number of the product provided by the global trade synchronization body, halal award or certificate details; ingredients used in the products, nutrition value of the product, source of raw materials used in the product, product packaging, and use of halal logistics, halal warehousing, halal retailing and halal finance, via interfacing module (102).

3. The system (100) as claimed in claim 1, wherein the interfacing module (102) communicates with the trading partners and external authorization bodies for extraction of product related and certification related information using communication techniques including application programmable interfaces, API, XML messages and electronic data interchange, EDI.

4. The system (100) as claimed in claim 1, wherein the data exchange platform (110) includes a portal (110) that comprises a payment interface to facilitate purchase of halal products.

5. The system (100) as claimed in claim 4, wherein the portal (110) includes a plurality of action buttons to facilitate trading partners to search for a particular product or a counterpart, subscribe to a particular product catalogue, contact a trading partner to request for information and make payment for a particular product.

6. The system (100) as claimed in claim 1, wherein the system (100) comprises an analytical engine (112) to analyze activities of the system (100) and generate analytics including forecasts, ranks and / or ratings of trading partners / products, recommendation of similar products, reports and combinations thereof.

7. The system as claimed in claim 1, wherein the system (100) comprises an updation module (114) to update product related information and halal certification related information to the repository (108) based upon interpreting changes to the product catalogues of trading partners and changes to halal certification information registered with the halal certification bodies.

8. A method for facilitating capture, verification, and interaction of halal product related information between geographically dispersed network of trading partners, the method comprising the following steps:
i. providing an interface for connecting with a plurality of trading partners, and external authorization bodies including global trade synchronization bodies, and global halal certification bodies;
ii. receiving product and halal award or certificate related information from at least one trading partner;
iii. extracting at least one trading partner's product and halal certification information from the external authorization bodies based on information received in step (ii);
iv. verifying the trading partner and its corresponding product by comparing the product and halal award or certificate related information with the extracted information;
v. merging the product and halal award or certificate related from the corresponding trading partner with the extracted halal certification information for the product into a data structure, if the verification is successful;
vi. storing the data structure in a repository; and
vii. providing a communication interface to provide interaction between the trading partners to communicate product related information stored in the repository.

9. The method as claimed in claim 8, wherein the step of merging the product and halal award or certificate related information with the halal certification information for the product into a data structure includes capturing identification number of the product provided by the global trade synchronization body, halal award or certificate details, ingredients used in the products, nutrition value of the product, source of raw materials used in the product, product packaging, and use of halal logistics, halal warehousing, halal retailing and halal finance.

10. The method as claimed in claim 8, wherein the step of providing a communication interface includes the step of facilitating trading partners to search for a particular product or supplier, subscribe to a particular product catalogue, contact a trading partner for requesting for information and make payment for a particular product.

11. The method as claimed in claim 8, wherein the method comprises the steps of providing a payment interface to facilitate purchase of halal products.

12. The method as claimed in claim 8, wherein the method comprises the steps of tracking and interpreting changes to the product catalogues of trading partners registered with the global trade synchronization, bodies and halal certification information available with the halal certification bodes; and updating the changes to data structure of that product stored in the repository.

13. The method as claimed in claim 8, wherein the method comprises the steps of analyzing activities on the portal; and generating analytics including forecasts, ranks and / or ratings for trading partner's products, recommendation of similar products and reports and combinations thereof based on the analyzed activities.

14. A method of generating a data structure to facilitate capture of verified halal product related information for geographically dispersed network of trading partners, the method comprising the following steps:
i. receiving product and halal award or certificate related information from trading partners;
ii. extracting each of the trading partner's product and halal certification information from external authorization bodies including global trade synchronization bodies and global halal certification bodies based on the product and halal award or certificate related information received in step (i);
iii. verifying the trading partner and its corresponding product by comparing the product and halal award or certificate related information provided by the trading partner with the extracted information obtained in step (ii);
iv. merging the product and halal award or certificate related information received from the corresponding trading partner with the extracted halal certification information for the associated product, if the verification is successful;
v. storing the merged information for a particular trading partner and at least one corresponding product into a discrete data structure; and
vi. storing the data structure into a repository.

15. The method as claimed in claim 14, wherein the step of receiving the product and award or certificate related information from trading partners includes capturing identification number of the product provided by the global trade synchronization halal award or certificate details, ingredients used in the products, nutrition value of the product, source of raw materials used in the product, product packaging, and information including use of halal logistics, halal warehousing, halal retailing and halal finance.

16. A computer readable medium for capturing verified halal product related information for geographically dispersed network of trading partners, comprising:
a processor configured to receive product and halal award or certificate related information from at least one trading partner, extract the at least one trading partner's product and halal certification information from external authorization bodies including global trade synchronization bodies and global halal certification bodies based on the product and halal award or certificate related information; verify the at least one trading partner and its corresponding product by comparing the product and halal award or certificate related information with the extracted information; and merge the product and halal award or certificate related information received from the corresponding trading partner with the extracted halal certification information for the associated product, if the verification is successful; and
a repository for storing the merged information for a particular trading partner and at least one corresponding product into a discrete data structure.

17. The computer readable medium as claimed in claim 16, wherein the product and halal award or certificate related information from trading partners includes identification number of the product provided by the global trade synchronization body, ingredients used in the products, nutrition value of the product, source of raw materials used in the product, product packaging, and information including use of halal logistics, halal warehousing, halal retailing and halal finance.

18. The computer readable medium as claimed in claim 16, incorporated in a data exchange platform for synchronizing and communicating halal product related information stored in the data structure between geographical, dispersed trading in partners.

19. The computer readable as claimed in claim 16, incorporated in a portal having a communication interface and a payment interface for using halal product related information stored in the data structure for facilitating commerce of halal products between geographically dispersed network of trading partners.
